# EUROPEAN PATENT SPECIFICATION

(11) **EP 3 541 147 B1**
(45) Date of publication and mention of the grant of the patent: **28.04.2021**
(21) Application number: 19162428.7
(22) Date of filing: 13.03.2019
(51) Int. Cl.: H05B 45/10

(54) **CONFIGURABLE EMERGENCY LUMINAIRE**
KONFIGURIERBARE NOTLEUCHTE
LUMINAIRE D'URGENCE CONFIGURABLE

(30) Priority: 16.03.2018 GB 201804294
(43) Date of publication of application: 18.09.2019
(73) Proprietor: Eaton Intelligent Power Limited, Dublin 4 (IE)
(72) Inventor: BEKIROPOULOS, Athanasios, 60100 Katerini (GR); ANTONIOU, Alexios, Athen (GR); TSACHOURIDIS, Kosmas, 60100 Katerini (GR)
(74) Representative: Eaton IP Group EMEA

(56) References cited:
- EP-A2- 3 010 311
- US-A1- 2012 235 579
- US-A1- 2015 061 495

## Description

An object of the invention is to provide a configurable emergency luminaire that can provide optimal emergency light in different settings, in particular when installed at different heights.

Emergency luminaires are used to providing lighting when a main power source fails. Such emergency luminaires use a power management unit that can be connected to a self-contained emergency power supply or be energized by a central emergency power supply. When the power management unit detects that the main power source fails, it will energize an emergency light using the emergency power supply.

Emergency luminaires are designed so that a maximum surface area is sufficiently illuminated for a certain duration and with a given power consumption. At a particular installation height and given power consumption, the optimum performance if achieved by selecting an emergency luminaire with the adhoc light characteristics which are related to the emergency luminaire lumen output and polar diagram.

Accordingly, it exist today various emergency luminaires each with different light distributions in order to satisfy the various installation requirements. This leads to inventory and availability issues since installers have to manage a large number of different, specialised emergency luminaires. For instance, emergency luminaires are known from US 2015/061495 A1. US 2015/061495 A1 suggests lighting devices and more particularly to nightlights incorporating multi-mode operation.

An object of the invention is to provide an emergency luminaire that can be configured to provide optimum performances in various environments.

This object is achieved by an emergency luminaire having the features of the independent claim. Preferred further developments constitute the subject-matter of the dependent claims.

The emergency luminaire described herein specifies a solution to make the polar diagram adjustable electronically by controlling in particular the current and/or voltage of different LED chips in various light sources with different characteristics within the emergency luminaire.

The emergency luminaire arrangement described herein are explained in greater detail below by way of exemplary embodiments with reference to the drawing. Elements which are the same in the individual figures are indicated with the same reference signs. The relationships between the elements are not shown to scale, however, but rather individual elements may be shown exaggeratedly large to assist in understanding.

In the figures:
Figure 1 shows a schematic top view of an exemplary embodiment of an emergency luminaire described herein;
Figure 2 shows schematic a sectional representation of an exemplary embodiments of an emergency luminaire described herein; and
Figures 3 and 4 show schematic perspective representations of exemplary embodiments of emergency luminaires described herein.

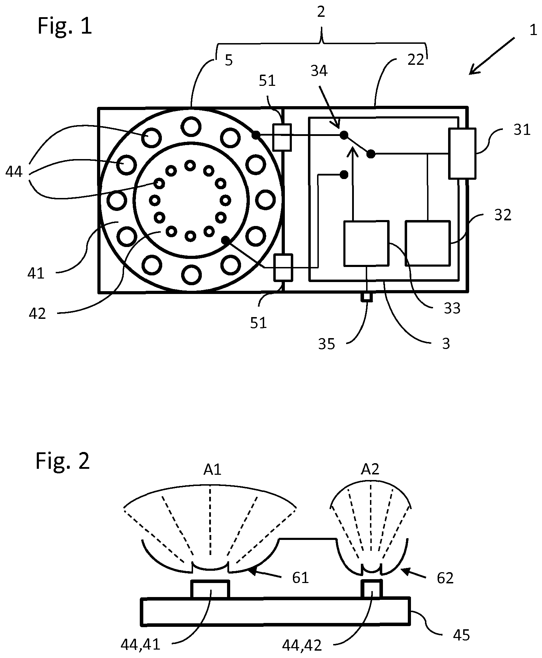

An exemplary embodiment of an emergency luminaire 1 is shown in Figure 1. The emergency luminaire 1 comprises a housing 2. The housing 2 has a base body 22 in which a power management unit 3 is arranged. The power management unit 3 comprises an input line 31 connected to a main power source such as an alternative voltage of about 115 V or 230 V. The power management unit is also connected to an emergency power source in the form of a rechargeable battery 32 contained in the base body 22.

The housing 2 also comprises a module body 5. In the module body 5, there is a first light source 41 and a second light source 42. Each of the light sources 41, 42 comprises a plurality of light-emitting diode chips 44.

In Figure 1 it is illustrated that the first light source 41 is shaped as a ring around the second light source 42 which is also of annular shape. This arrangement is just an example. Other shapes of the light sources 41, 42, might also be chosen.

The characteristics of the light sources 41 and 42 are different. For example, their polar diagram of luminous intensity in candelas, light output, or focus beam are different. This can be achieved by the use of LED chips with different characteristics and/or the use of different lenses.

In the current embodiment further illustrated with reference to Figure 2, the LED chips 44 of the light sources 41 and 42 are arranged on a common plane 45, for example a circuit board. The LED chips 44 of the different light sources 41 and 42 are assigned to different optics 61, 62. The lenses 61 and 62 each have different geometrical features.

By means of the different lenses 61 and 62, the LEDs of the first light source 41 emit in a wider angular range A1 and the LEDs of the second light source 42 emit in a narrower angular range A2.

As an option, the LED chips 44 of the second light source 42 can be mounted on a submount to adjust a distance between the LED chip 44 and the associated lens.

In such am embodiment, the same lens can be used for both light sources 41 and 42. However, by means of a shape of the plane, the LED chips 44 are at different distances from the lens. Thus, the emission characteristics of each light source are different.

As indicated above, in the example described, the light source 41 presents a broad beam while the light source 42 presents a narrow beam.

The power management unit 3 has a programmable controller 33 by means of which the first and second light sources 41, 42 are energized.

The controller 33 can be programmed between several configurations, each corresponding to a specific distribution of the of energy provided by the battery 32 between the light sources 41 and 42. Depending on the programmed configuration, the controller 33 controls the voltage and/or the tension applied to each of the first and second light sources 41 and 42. Those configurations allow to adjust the output of the emergency luminaire 1 to various installations such as various heights or reflective environments.

In the example illustrated with reference to Figure 1, the controller 33 can be programmed between two configurations. Indeed, the controlled 33 controls a switch 34 in order to provide the energy from the battery 32 to only one of the light sources 41 and 42 based on a selected configuration.

The controller 33 can be programmed by means of various interfaces. In the example illustrated, the emergency luminaire 1 comprises a test point 35. When the test point 35 is activated, for example by pressing on it once , the emergency light function is activated. When the test point 35 is pushed repeatedly, it allows an user to select the configuration of the emergency luminaire.

Alternatively, the controller 33 is equipped with wireless communication means and can be programmed remotely.

The emergency luminaire described is operated as follows.

During the installation, a user selects one of the available configuration for the emergency light by use of the test point 35.

When a voltage is applied to the input line 31, none of the first and second light sources 41, 42 is energized meaning that the emergency luminaire is not providing any light. When no voltage is applied to the input line 31, the controller detects a failure of the main power source and triggers the emergency lighting. By mean of the battery 32 and of the switch 34, the controller 33 energizes either one of the first light source 41 or second light source 42 depending on the user selected configuration.

Accordingly, the same luminaire 1 can be used to provide either an emergency lighting with a broad beam by only energizing the light source 41 or an emergency lighting with a narrow beam by only energizing the light source 42.

In another embodiment, the controller 33 is programmed to provide a portion of the energy from the battery 32 to each of the first and second light sources 41 and 42. In such case, the switch 34 could be replaced by two triacs each connected to a different light source and controlled independently by the controller 33.

In the example described, the controller 33 comprises 11 different configurations ranking by increment of 10% from 0% of the energy distributed to the first light source 41 and 100% to the second light source 42 to the opposite configuration with 100% of the energy distributed to the first light source 41.

In consequence, the light characteristics of the emergency luminaire 1 will be a weighted combination of the characteristics of each of the two light sources 41 and 42. By mean of illustration, by providing 10% of the energy to the first light source 41 and 90% of the energy to the second light source, the polar diagram of the emergency luminaire is different from the polar diagram of each of the first and second light sources 41 and 42.

It is worth mentioning that, the amount of energy provided from the battery 32 being constant, the overall heat output of the light sources 41 and 42 will remain the same. Therefore, even when using two different light sources 41 and 42, the size of the heat sink of the emergency luminaire does not need to be increased.

As an option, at least one of the light sources, such as the light source 42, comprises a first group and a second group of LED chips 44. The groups have similar light emission characteristics but their spatial distribution is such that by energizing different groups, the overall light output of the emergency luminaire is adjusted. In this example, the controller 33 is further adapted to control each of the groups independently for an enhanced adaptability of the emergency luminaire.

In one embodiment, the different light sources in the emergency luminaire are made of LEDs with different light characteristics. For example, LEDs designed to provide lights of different colors that can be combined through the several configurations of the programmable controller.

With the emergency luminaire described herein an electronic control of an emergency light distribution for optimum performance per installation height is enabled.

This is achieved by an emergency luminaire with at least two groups of LED chips, each group having different optics, such as a first one with a narrow and/or concentrated light distribution that is more efficient at greater installation heights, and a second one with a wide and/or spread out light distribution in particular for lower installation heights. By controlling independently or separately the relevant groups of LED chips on, the desired light distribution can be achieved, which can be a wide or a narrow one. Moreover, by controlling the power delivered to the different groups and/or LED chips, intermediate light distributions can also be achieved. There could also be additional light sources or groups or LED chips with distributions of intermediate width or side non-symmetrical ones for wall installations where the selection could be done by the same electronic method.

This results in a single product with optimum performance at all installation heights without the need for any additional parts or rework and/or modifications on its LED chips or diffusors and/or lenses.

In the embodiment described, when there is a voltage on the input line 31, none of the first and second light sources 41 and 42 are used. In a different embodiment, the controller 33 is used to distribute to the first and second light sources the energy of both the main power source and the emergency power source. For example, when a voltage is detected on the input line 31, energy from the main power source is distributed at 90% to the first light source and 10% to the second light source. When the main power source fails, the energy from the emergency power source is distributed at 90% to the second light source and 10% to the first light source.

In the illustrated example, the module body 5 with the light sources 41, 42 is moveable relative to the base body 22. Each of the module body and base body comprises mechanical and electrical connectors 51 allowing to attach and detach the module body 5 from the base body 22 while ensuring structural integrity and electrical connection.

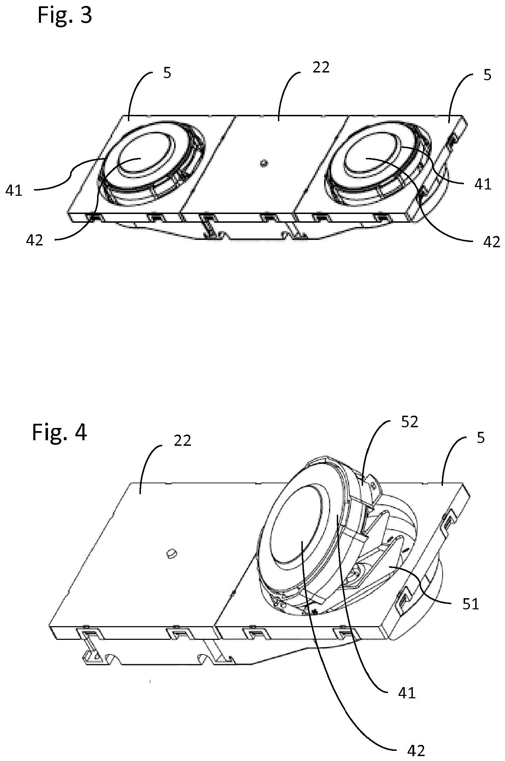

In the embodiment illustrated in Figure 3, there are two of the module bodies 5, each comprising one of the first light sources 41 and one of the second light sources 42. The module bodies 5 are mechanically and electrically connected to the base body 22. Additional base and module bodies can be combined in order to achieve the targeted light output.

In the exemplary embodiment of Figure 4 it is illustrated that the module body 5 comprises a rotating hinge 51 and a platform 52 on which are mounted the first and second light sources 41, 42. By means of the rotating hinge 51, an angle of the associated platform 52 relative to the base body 22 can be adjusted. Similarly, the platform 52 can be rotated together with the hinge 23. Thus, the direction of the emitted light can be adjusted relative to the base body 22.

According to at least one embodiment, the power supply comprises a plurality of controllers with at least one programmable controller to control the optical emission characteristics at least of the second light source or the second light sources and as an option of the at least one first light source, too. The controller can be an integrated circuit like an ASIC.

## Claims

1. An emergency luminaire (1) comprising
- a housing (2) having a base body (22),
- a power management unit (3) arranged in the base body (22),
- at least one first light source (41), and
wherein
- the emergency luminaire further comprises at least one second light source (42) with different lighting characteristics compared to the first light source (41);
- the at least one first light source (41) and the at least one second light source (42) each comprise at least one light-emitting diode chip (44);
- the at least one first light source (41) as well as the at least one second light source (42) are energized by the power management unit (3); and
- the power management unit comprises at least one controller (33) programmable between several configuration each configuration corresponding to a specific distribution of the energy provided by an emergency power source between the at least one first light source and the at least one second light source;
**characterized in that**,
said at least one first light source (41) and said at least one second light source (42) are housed in a module body (5), wherein the module body (5) is movable relative to the base body (22) and adapted to be mechanically and electrically detachably connected to the base body.

2. Emergency luminaire according to claim 1, wherein the power management unit (3) comprises a switch (34) controlled by said programmable controller (33) to connect the emergency power source (32) to either the first light source or the second light source.

3. Emergency luminaire according to claim 1, wherein the power management unit (3) comprises a connecting component controlled by said programmable controller (33) to distribute at least a portion of the energy provided by the emergency power source to each of the first and second power sources.

4. Emergency luminaire according to any of the preceding claims, wherein at least one of the first and second light source comprises several groups of light elements spatially distinct and said configurations corresponds to a specific distribution of the energy provided by the emergency power source among the various groups of light elements within a same light source.

5. Emergency luminaire according to any of the preceding claims, wherein the emergency luminaire comprises a user interface (35) to program the controller.

6. Emergency luminaire according to claim 5, wherein the user interface is a test point (35) also used to test the emergency luminaire.

7. Emergency luminaire according to claim 1, comprising a plurality of the module bodies (5), each of the module bodies (5) comprises one of the first light sources (41) and one of the second light sources (42),
wherein the module bodies (5) are movable relative to the base body, and
wherein all module bodies (5) and all the light sources (41, 42) are energized by the power management unit in the base body (22).

8. Emergency luminaire according to any of the preceding claims, wherein the first and second light sources are formed by light-emitting diode chips (44) placed on a common plane (45) and associated with different optics (61, 62).

9. Emergency luminaire according to any of claims 1 to 7, wherein the first and second light sources are formed by light-emitting diode chips (44) placed at different height above a common plane (45) and associated with a single optic.

10. Emergency luminaire according to any of claims 1 to 7, wherein the first and second light sources are formed by light-emitting diode chips with different optical characteristics.

## Patentansprüche

1. Notleuchte (1), umfassend
- ein Gehäuse (2), das einen Grundkörper (22) aufweist,
- eine Energieverwaltungseinheit (3), die in dem Grundkörper (22) angeordnet ist,
- mindestens eine erste Lichtquelle (41), und
wobei
- die Notleuchte weiter mindestens eine zweite Lichtquelle (42) mit unterschiedlichen Beleuchtungsmerkmalen im Vergleich zu der ersten Lichtquelle (41) aufweist;
- die mindestens eine erste Lichtquelle (41) und die mindestens eine zweite Lichtquelle (42) jeweils mindestens einen Leuchtdiodenchip (44) umfasst;
- die mindestens eine erste Lichtquelle (41) sowie die mindestens eine zweite Lichtquelle (42) durch die Energieverwaltungseinheit (3) mit Strom versorgt wird; und
- die Energieverwaltungseinheit mindestens eine Steuerung (33) umfasst, die für mehrere Konfigurationen programmierbar ist, wobei jede Konfiguration einer spezifischen Verteilung der von einer Notstromquelle bereitgestellten Energie auf die mindestens eine zweite Lichtquelle entspricht;
**dadurch gekennzeichnet, dass**
die mindestens eine erste Lichtquelle (41) und die mindestens eine zweite Lichtquelle (42) in einem Modulkörper (5) untergebracht sind, wobei der Modulkörper (5) im Verhältnis zu dem Grundkörper (22) bewegbar ist und angepasst ist, um mechanisch und elektrisch abnehmbar mit dem Grundkörper verbunden werden zu können.

2. Notleuchte nach Anspruch 1, wobei die Energieverwaltungseinheit (3) einen Schalter (34) umfasst, der von der programmierbaren Steuerung (33) gesteuert wird, um die Notstromquelle (32) entweder mit der ersten Lichtquelle oder der zweiten Lichtquelle zu verbinden.

3. Notleuchte nach Anspruch 1, wobei die Energieverwaltungseinheit (3) eine Verbindungskomponente umfasst, die von der programmierbaren Steuerung (33) gesteuert wird, um mindestens einen Teil der von der Notstromquelle bereitgestellten Energie jeweils an die erste und die zweite Stromquelle zu verteilen.

4. Notleuchte nach einem der vorstehenden Ansprüche, wobei mindestens eine der ersten und der zweiten Lichtquelle mehrere Gruppen von räumlich unterschiedlichen Lichtelementen umfasst, und die Konfigurationen einer spezifischen Verteilung der von einer Notstromquelle bereitgestellten Energie auf die verschiedenen Gruppen von Lichtelementen innerhalb einer gleichen Lichtquelle entsprechen.

5. Notleuchte nach einem der vorstehenden Ansprüche, wobei die Notleuchte eine Benutzerschnittstelle (35) umfasst, um die Steuerung zu programmieren.

6. Notleuchte nach Anspruch 5, wobei die Benutzerschnittstelle ein Testpunkt (35) ist, der auch verwendet wird, um die Notleuchte zu testen.

7. Notleuchte nach Anspruch 1, umfassend eine Vielzahl der Modulkörper (5), wobei jeder der Modulkörper (5) eine der ersten Lichtquellen (41) und eine der zweiten Lichtquellen (42) umfasst,
wobei die Modulkörper (5) im Verhältnis zu dem Grundkörper beweglich sind, und
wobei alle Modulkörper (5) und alle Lichtquellen (41, 42) durch die Energieverwaltungseinheit im Grundkörper (22) mit Strom versorgt werden.

8. Notleuchte nach einem der vorstehenden Ansprüche, wobei die ersten und die zweiten Lichtquellen durch Leuchtdiodenchips (44) gebildet sind, die in einer gemeinsamen Ebene (45) angebracht sind und unterschiedlichen Optiken (61, 62) zugeordnet sind.

9. Notleuchte nach einem der Ansprüche 1 bis 7, wobei die ersten und die zweiten Lichtquellen durch Leuchtdiodenchips (44) gebildet sind, die auf unterschiedlichen Höhen über einer gemeinsamen Ebene (45) angebracht sind und einer einzigen Optik zugeordnet sind.

10. Notleuchte nach einem der Ansprüche 1 bis 7, wobei die ersten und die zweiten Lichtquellen durch Leuchtdiodenchips mit unterschiedlichen optischen Merkmalen gebildet sind.

## Revendications

1. Luminaire d'urgence (1) comprenant
- un logement (2) présentant un corps de base (22),
- une unité de gestion d'alimentation (3) agencée dans le corps de base (22),
- au moins une première source de lumière (41), et
dans lequel
- le luminaire d'urgence comprend en outre au moins une seconde source de lumière (42) avec des caractéristiques d'éclairage différentes par rapport à la première source de lumière (41) ;
- l'au moins une première source de lumière (41) et l'au moins une seconde source de lumière (42) comprennent chacune au moins une puce à diode électroluminescente (44) ;
- l'au moins une première source de lumière (41) ainsi que l'au moins une seconde source de lumière (42) sont énergisées par l'unité de gestion d'alimentation (3) ; et
- l'unité de gestion d'alimentation comprend au moins un dispositif de commande (33) programmable parmi plusieurs configurations, chaque configuration correspondant à une distribution spécifique de l'énergie fournie par une source d'alimentation d'urgence entre l'au moins une première source de lumière et l'au moins une seconde source de lumière ;
**caractérisé en ce que**,
l'au moins une première source de lumière (41) et l'au moins une seconde source de lumière (42) sont logées dans un corps de module (5), dans lequel le corps de module (5) est déplaçable par rapport au corps de base (22) et adapté pour être relié mécaniquement et électriquement de manière amovible au corps de base.

2. Luminaire d'urgence selon la revendication 1, dans lequel l'unité de gestion d'alimentation (3) comprend un interrupteur (34) commandé par ledit dispositif de commande (33) programmable pour connecter la source d'alimentation d'urgence (32) soit à la première source de lumière soit à la seconde source de lumière.

3. Luminaire d'urgence selon la revendication 1, dans lequel l'unité de gestion d'alimentation (3) comprend un composant de liaison commandé par ledit dispositif de commande (33) programmable pour distribuer au moins une partie de l'énergie fournie par la source d'alimentation d'urgence à chacune des première et seconde sources d'énergie.

4. Luminaire d'urgence selon l'une quelconque des revendications précédentes, dans lequel au moins l'une de la première et de la seconde source de lumière comprend plusieurs groupes d'éléments de lumière distincts dans l'espace et lesdites configurations correspondent à une distribution spécifique de l'énergie fournie par la source d'alimentation d'urgence parmi les divers groupes d'éléments de lumière au sein d'une même source de lumière.

5. Luminaire d'urgence selon l'une quelconque des revendications précédentes, dans lequel le luminaire d'urgence comprend une interface utilisateur (35) pour programmer le dispositif de commande.

6. Luminaire d'urgence selon la revendication 5, dans lequel l'interface utilisateur est un point d'essai (35) également utilisé pour tester le luminaire d'urgence.

7. Luminaire d'urgence selon la revendication 1, comprenant une pluralité de corps de module (5), chacun des corps de module (5) comprend une d'une première source de lumière (41) et une d'une seconde source de lumière (42),
dans lequel les corps de module (5) sont déplaçables par rapport au corps de base, et
dans lequel tous les corps de module (5) et toutes les sources de lumière (41, 42) sont énergisés par l'unité de gestion d'alimentation dans le corps de base (22).

8. Luminaire d'urgence selon l'une quelconque des revendications précédentes, dans lequel les premières et secondes sources de lumière sont formées par des puces à diodes électroluminescentes (44) placées sur un plan commun (45) et associées à différentes optiques (61, 62).

9. Luminaire d'urgence selon l'une quelconque des revendications 1 à 7, dans lequel les premières et secondes sources de lumière sont formées par des puces à diodes électroluminescentes (44) placées à différentes hauteurs au-dessus d'un plan commun (45) et associées avec une optique unique.

10. Luminaire d'urgence selon l'une quelconque des revendications 1 à 7, dans lequel les première et seconde sources de lumière sont formées par des puces à diodes électroluminescentes avec des caractéristiques optiques différentes.
